# EUROPEAN PATENT APPLICATION

(11) **EP 3 624 031 A1**
(43) Date of publication of application: **18.03.2020**
(21) Application number: 19196511.0
(22) Date of filing: 10.09.2019
(51) Int. Cl.: G06Q 10/08, G06Q 50/28, G06Q 50/30

(54) **METHOD AND SYSTEM FOR POOL MANAGEMENT OF TRANSPORTATION ASSETS**

(30) Priority: 14.09.2018 US 201816131646
(71) Applicant: BlackBerry Limited, Waterloo, Ontario N2K 0A7 (CA)
(72) Inventor: KUGLER, Andrew, Waterloo, Ontario N2K 0A7 (CA); SOMERS, Gregory William, Waterloo, Ontario N2K 0A7 (CA)
(74) Representative: MERH-IP Matias Erny Reichl Hoffmann Patentanwälte PartG mbB

(57) **Abstract**

A method at a computing device for pool management, the method including determining a number and type of available assets in a defined area; finding that the number of available assets in at least one type of assets falls outside a defined range; and performing a remedial action based on the finding.

## Description

### FIELD OF THE DISCLOSURE

The present disclosure relates to the transportation of goods, and in particular relates to pool management of transportation assets.

### BACKGROUND

When transporting goods, often specific types of assets are required at the shipping yard. Depending on the type and quantity of the goods to be shipped, various assets may be needed. For example, in a truck shipping yard, a load may require one or more flatbed trailers, refrigerated trailers, dry vans, tanker trailers, among other options. As used herein, a shipping yard may be a trailer yard, railyard or similar storage facility.

Managing assets in a yard is challenging and knowing if such shipping yard has needed assets is important. For example, a transportation company may need to have two refrigerated trailers and two flatbed trailers on Monday morning at 9 a.m. to transport goods. Without such trailers, the goods needing to be transported may be stranded and the transportation company may fail to meet its contractual obligations.

Even if a transportation company knows that that there are trailers in their yard, it may not have information required to make decisions. For example, such trailers may be full or may be scheduled to be used for a different delivery.

### BRIEF DESCRIPTION OF THE DRAWINGS

The present disclosure will be better understood with reference to the drawings, in which:
**Figure 1** is a block diagram showing an example container yard;
**Figure 2** is a block diagram of an example sensor apparatus capable of being used with the embodiments herein;
**Figure 3** is a block diagram showing communications between servers and shipping containers;
**Figure 4** is a process diagram showing a process at a network element for detecting available assets within a shipping yard and potentially taking remedial action on detecting deficiencies;
**Figure 5** is a process diagram showing a process at a network element for detecting current and future available assets within a shipping yard and potentially taking remedial action on detecting deficiencies; and
**Figure 6** is a block diagram of an example computing device capable of being used in accordance with the embodiments of the present disclosure.

### DETAILED DESCRIPTION

The present disclosure provides a method at a computing device for pool management, the method comprising: determining a number and type of available assets in a defined area; finding that the number of available assets in at least one type of assets falls outside a defined range; and performing a remedial action based on the finding.

The present disclosure further provides a computing device configured for pool management, the computing device comprising: a processor; and a communications subsystem, wherein the computing device is configured to: determine a number and type of available assets in a defined area; find that the number of available assets in at least one type of assets falls outside a defined range; and perform a remedial action based on the finding.

The present disclosure further provides a computer readable medium for storing instruction code which, when executed by a processor on a computing device configured for pool management, cause the computing device to: determine a number and type of available assets in a defined area; find that the number of available assets in at least one type of assets falls outside a defined range; and perform a remedial action based on the finding.

The present disclosure relates to pool management of assets for a transportation company. In various embodiments described below, current and future anticipated asset requirements for a shipping yard may be assessed or predicted, and remedial action may be taken if the requirement for assets is not met in a container yard or geofenced area.

In particular, in the present disclosure, a pool management feature is provided which shows a snapshot of surpluses and deficits of transportation assets at a particular time. The particular time may be the current time, and thus the snapshot shows assets within a yard or geofence at the present moment. In other embodiments, the snapshot is at a future time, and delivery schedules for transportation assets may be utilized in order to predict future asset needs and allocations.

Pool management allows a transportation company to set a specified number of assets that are required to be within a yard or geofence at any particular time. For example, if there are supposed to be two flatbed trailers in a yard, but there is only one, and then a transportation company may see the deficit of one flatbed trailer in a pool management dashboard or computing application. This dashboard or computing application may show a snapshot of current deficits and surpluses of trailer groups in a given yard or geofence.

While knowledge of current deficits or surpluses is beneficial, in some cases it may also be beneficial to utilize the pool management for future asset needs. Thus, pool management can be applied to a future delivery to ensure that proper asset numbers are ready in a yard for a given date. For example, if the transportation company is expecting to deliver goods on Monday morning that needs two flatbeds and two refrigerated trucks, the company can set up pool management to require these assets in the yard on Monday morning. If the yard currently has one flatbed trailer and one refrigerated trailer, a notification may be sent to drivers or autonomous trucks to bring trailers to a particular yard or geofence in anticipation of the delivery. For example, if a refrigerated trailer is needed, a computing device can inventory refrigerated trucks in the vicinity of the yard or geofence. In some cases, the nearby assets can be sorted by distance to the geofence.

In some cases, the asset may need to be empty and idle so that it is available for the delivery.

Thus, if all the preconditions are met, then an instruction may be provided to move the asset or assets to the yard or geofence. As indicated above, the instruction may be an automated instruction to a driver or an autonomous vehicle in some cases. In other cases, the instruction may be a prompt to an operator of a computing device to contact a driver associated with the asset. Other options are possible.

In some cases, if assets are not available, or if assets are too far away to be economically viable, then the transportation company may be provided with options to lease an asset from a leasing partner, which may be more cost-effective.

In some embodiments below, it is also possible to relate assets to deliveries by grouping them as part of the delivery. If they are associated with the delivery, then a trailer or asset is in a busy state. However, once the deliveries complete, the asset may be freed up and made available again.

Thus, a dispatcher may use a pool management to set up a delivery for a specific date. The system may look for current deficits of assets and use available information to determine if assets are available and send notifications out to those assets to bring those assets within the yard or geofence at the appropriate time.

In one embodiment, the system may know the time it will take for a trailer to arrive based on distance away from the yard or geofence and can make sure that the asset arrives in time for the delivery schedule.

While the disclosure below considers assets to be trailers, this is not limiting. In other cases, railcars, ships, or other transportation assets may equally be utilized with the systems described herein. The use of trailers is therefore only provided for illustration purposes.

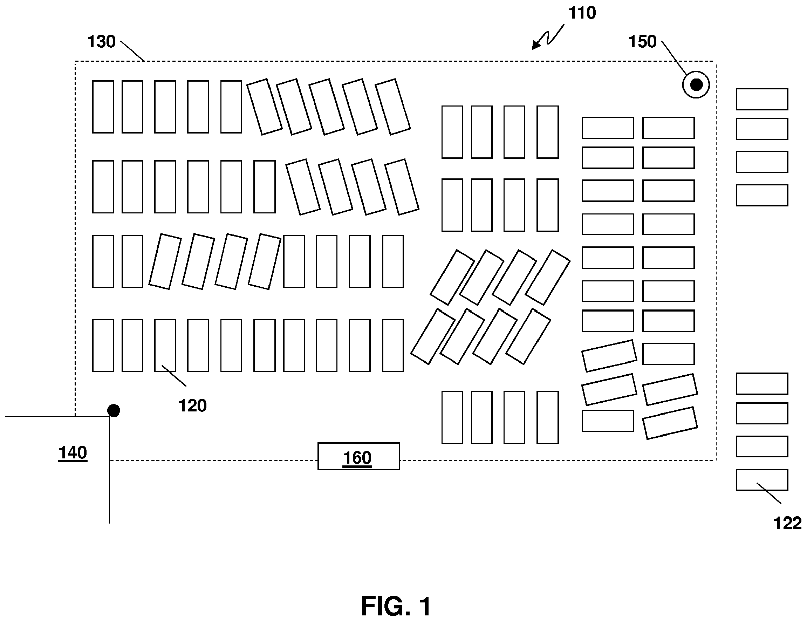

Reference is now made to **Figure 1**, which shows a simplified environment of a shipping yard **110**. Shipping yard **110** includes a plurality of shipping containers **120**. In some cases, the shipping containers **120** may be within a fenced area **130**. However, due to the dynamic nature of the shipping yard, some containers, shown with reference **122**, are outside of the fenced area **130**. Further, in many cases shipping yard **110** may simply be too big to have a fenced area **130**. In many cases, the shipping yard **110** will have a geofence associated with the yard.

Fixed infrastructure points within the shipping yard **110** may exist. For example, a building **140** or a fixed structure **150** such as a lamppost, security pole, or crane, among other options, may exist within the shipping yard **110**.

Shipping containers **120** or **122** may be placed in rows, or stacked, or simply deposited in an empty location.

A shipping yard may have fixed ingress or egress points **160**, which may allow for control of assets entering or exiting the yard and also may allow for a count of assets within the yard.

In accordance with one aspect of the present disclosure, all or a subset of the vehicles or trailers within the shipping yard may include a sensor apparatus. In particular, in one embodiment, a subset of containers **120** or **122** may have associated therewith a sensor apparatus that can be triggered to obtain information about the trailer or vehicle and communicate the results to a centralized server.

Thus, in the embodiments of the present disclosure, sensor systems may be included on the vehicle. A transportation company may have a plurality of sensor apparatuses operating remotely from a central monitoring station to provide remote sensor data to a management or monitoring hub. The sensors may be placed on a trailer, shipping container or similar product to provide a central station with information regarding the container. Such information may include, but is not limited to, information concerning the current location of the trailer or shipping container, the temperature inside the shipping container or trailer, operational parameters such as tire pressure or engine temperature, that the doors on the shipping container or trailer are closed, whether a sudden acceleration or deceleration event has occurred, the tilt angle of the trailer or shipping container, whether the trailer is loaded or unloaded, and further granularity for information relating to a volume of loading and/or empty space among other data. In some cases, the sensor apparatus merely provides the location of the trailer, and no other sensor information is provided.

In other embodiments the sensor apparatus may be secured to a vehicle itself. As used herein, the term vehicle can include any motorized vehicle such as a truck, tractor, car, boat, motorcycle, snow machine, among others, and can further include a trailer, shipping container or other such cargo moving container, whether attached to a motorized vehicle or not.

In accordance with the embodiments described herein, a sensor apparatus may be any apparatus or computing device that is capable of providing data or information from sensors associated with the sensor apparatus to a central monitoring or control station. Sensors associated with the sensor apparatus may either be physically part of the sensor apparatus, for example a built-in global navigation satellite system (GNSS) chipset, or may be associated with the sensor apparatus through short range wired or wireless communications. For example, a tire pressure monitor may provide information through a Bluetooth™ Low Energy (BLE) signal from the tire to the sensor apparatus. In other cases, a camera may be part of the sensor apparatus or may communicate with a sensor apparatus through wired or wireless technologies. Other examples of sensors are possible.

A central monitoring station may be any server or combination of servers that are remote from the sensor apparatus. The central monitoring station can receive data from a plurality of sensor apparatuses.

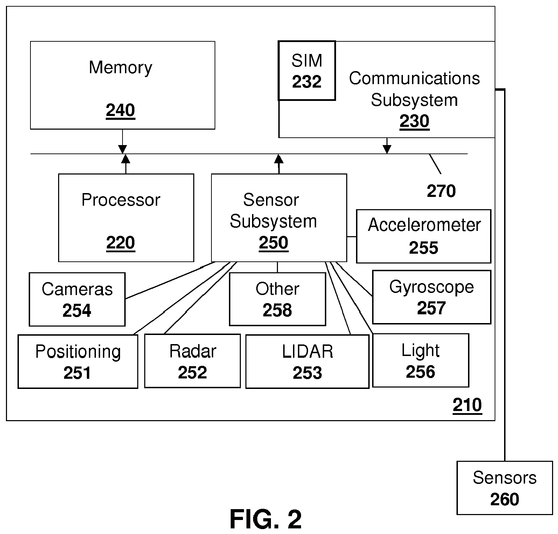

One sensor apparatus is shown with regard to **Figure 2**. The sensor apparatus of **Figure 2** is however merely an example and other sensor apparatuses could equally be used in accordance with the embodiments of the present disclosure.

Reference is now made to **Figure 2**, which shows an example sensor apparatus **210**. Sensor apparatus **210** can be any computing device or network node. Such computing device or network node may include any type of electronic device, including but not limited to, mobile devices such as smartphones or cellular telephones. Examples can further include fixed or mobile devices, such as internet of things devices, endpoints, home automation devices, medical equipment in hospital or home environments, inventory tracking devices, environmental monitoring devices, energy management devices, infrastructure management devices, vehicles or devices for vehicles, fixed electronic devices, among others.

Sensor apparatus **210** comprises a processor **220** and at least one communications subsystem **230**, where the processor **220** and communications subsystem **230** cooperate to perform the methods of the embodiments described herein. Communications subsystem **230** may, in some embodiments, comprise multiple subsystems, for example for different radio technologies.

Communications subsystem **230** allows sensor apparatus **210** to communicate with other devices or network elements. Communications subsystem **230** may use one or more of a variety of communications types, including but not limited to cellular, satellite, Bluetooth™, Bluetooth™ Low Energy, Wi-Fi, wireless local area network (WLAN), near field communications (NFC), ZigBee, wired connections such as Ethernet or fiber, among other options.

As such, a communications subsystem **230** for wireless communications will typically have one or more receivers and transmitters, as well as associated components such as one or more antenna elements, local oscillators (LOs), and may include a processing module such as a digital signal processor (DSP). As will be apparent to those skilled in the field of communications, the particular design of the communication subsystem **230** will be dependent upon the communication network or communication technology on which the sensor apparatus is intended to operate.

If communications subsystem **230** operates over a cellular connection, a subscriber identity module (SIM) **232** may be provided to allow such communication. SIM **232** may be a physical card or may be virtual. In some embodiments SIM **232** may also be referred to as a universal subscriber identity module (USIM), as merely an identity module (IM), or as an embedded Universal Integrated Circuit Card (eUICC), among other options.

Processor **220** generally controls the overall operation of the sensor apparatus **210** and is configured to execute programmable logic, which may be stored, along with data, using memory **240**. Memory **240** can be any tangible, non-transitory computer readable storage medium, including but not limited to optical (e.g., CD, DVD, etc.), magnetic (e.g., tape), flash drive, hard drive, or other memory known in the art.

Alternatively, or in addition to memory **240**, sensor apparatus **210** may access data or programmable logic from an external storage medium, for example through communications subsystem **230**.

In the embodiment of **Figure 2**, sensor apparatus **210** may utilize a plurality of sensors, which may either be part of sensor apparatus **210** in some embodiments or may communicate with sensor apparatus **210** in other embodiments. For internal sensors, processor **220** may receive input from a sensor subsystem **250**.

Examples of sensors in the embodiment of **Figure 2** include a positioning sensor **251**, a RADAR sensor **252**, a LIDAR **253**, one or more image sensors **254**, accelerometer **255**, light sensors **256**, gyroscopic sensors **257**, and other sensors **258**. Other sensors may be any sensor that is capable of reading or obtaining data that may be useful for sensor apparatus **210**. However, the sensors shown in the embodiment of **Figure 2** are merely examples, and in other embodiments different sensors or a subset of sensors shown in **Figure 2** may be used. For example, in one embodiment of the present disclosure, only a positioning sensor is provided.

The positioning sensor may use a positioning subsystem such as a Global Navigation Satellite System (GNSS) receiver which may be, for example, a Global Positioning System (GPS) receiver (e.g. in the form of a chip or chipset) for receiving GPS radio signals transmitted from one or more orbiting GPS satellites. References herein to "GPS" are meant to include Assisted GPS and Aided GPS. Although the present disclosure refers expressly to the "Global Positioning System", it should be understood that this term and its abbreviation "GPS" are being used expansively to include any GNSS or satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. A Wi-Fi™ Positioning System (WPS) may also be used as a positioning subsystem. Radiolocation techniques and/or WPS may also be used in conjunction with GPS in a hybrid positioning system

Other sensors may be external to the sensor apparatus **210** and communicate with the sensor apparatus **210** through, for example, communications subsystem **230**. Such other sensors are shown as sensors **260** and the embodiment of **Figure 2**. For example, a tire pressure monitoring system may communicate over short range communications such as Bluetooth™ Low Energy with communications subsystem **230** on the sensor apparatus **210**. Other examples of sensors **260** are possible.

Further, the sensor apparatus **210** of **Figure 2** may, in some embodiments, act as a gateway, and may communicate with other sensor apparatuses (not shown) on the trailer, where the other sensor apparatuses may act as hubs for a subset of the sensors on the vehicle or trailer.

Communications between the various elements of sensor apparatus **210** may be through an internal bus **270** in one embodiment. However, other forms of communication are possible.

Sensor apparatus **210** may be affixed to any fixed or portable platform. For example, sensor apparatus **210** may be affixed to shipping containers, truck trailers, truck cabs in one embodiment. In other embodiments, sensor apparatus **210** may be affixed to any vehicle, including motor vehicles (e.g., automobiles, cars, trucks, buses, motorcycles, etc.), aircraft (e.g., airplanes, unmanned aerial vehicles, unmanned aircraft systems, drones, helicopters, etc.), spacecraft (e.g., spaceplanes, space shuttles, space capsules, space stations, satellites, etc.), watercraft (e.g., ships, boats, hovercraft, submarines, etc.), railed vehicles (e.g., trains and trams, etc.), and other types of vehicles including any combinations of any of the foregoing, whether currently existing or after arising, among others.

Typically, once affixed, the sensor apparatus may be registered with a computing device or server to allow a correlation of an asset type with the sensor apparatus. Thus, if the sensor apparatus is associated with a particular trailer type, such information may be provided to a server or computing device to all allow for asset management utilizing such sensor apparatus.

In other cases, sensor apparatus **210** could be carried by a user.

Such sensor apparatus **210** may be a power limited device. For example, sensor apparatus **210** could be a battery operated device that can be affixed to a shipping container or trailer in some embodiments. Other limited power sources could include any limited power supply, such as a small generator or dynamo, a fuel cell, solar power, among other options.

In other embodiments, sensor apparatus **210** may utilize external power, for example from the engine of a tractor pulling the trailer, from a land power source for example on a plugged in recreational vehicle or from a building power supply, among other options.

External power may further allow for recharging of batteries to allow the sensor apparatus **210** to then operate in a power limited mode again. Recharging methods may also include other power sources, such as, but not limited to, solar, electromagnetic, acoustic or vibration charging.

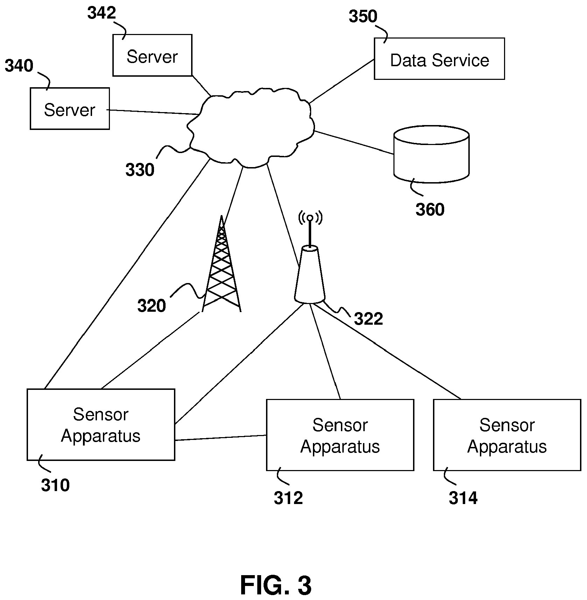

The sensor apparatus from **Figure 2** may be used in a variety of environments. One example environment in which the sensor apparatus may be used is shown with regard to **Figure 3**.

Referring to **Figure 3**, three sensor apparatuses, namely sensor apparatus **310**, sensor apparatus **312**, and sensor apparatus **314** are provided.

In the example of **Figure 3**, sensor apparatus **310** may communicate through a cellular base station **320** or through an access point **322**. Access point **322** may be any wireless communication access point. For example, access point **322** may be a WiFi router or a private router network. Also, a private router network may have a path from the access point name (APN) to a server, and may reduce network latency based on a location of the sensor apparatus in some embodiments.

Further, in some embodiments, sensor apparatus **310** could communicate through a wired access point such as Ethernet or fiber, among other options.

The communication may then proceed over a wide area network such as Internet **330** and proceed to servers **340** or **342**.

Similarly, sensor apparatus **312** and sensor apparatus **314** may communicate with servers **340** or server **342** through one or both of the base station **320** or access point **322**, among other options for such communication.

In other embodiments, any one of sensors **310**, **312** or **314** may communicate through satellite communication technology. This, for example, may be useful if the sensor apparatus is travelling to areas that are outside of cellular coverage or access point coverage.

In other embodiments, sensor apparatus **312** may be out of range of access point **322** and may communicate with sensor apparatus **310** to allow sensor apparatus **310** to act as a relay for communications.

Communication between sensor apparatus **310** and server **340** may be one directional or bidirectional. Thus, in one embodiment sensor apparatus **310** may provide information to server **340** but server **340** does not respond. In other cases, server **340** may issue commands to sensor apparatus **310** but data may be stored internally on sensor apparatus **310** until the sensor apparatus arrives at a particular location. In other cases, two-way communication may exist between sensor apparatus **310** and server **340**.

A server, central server, processing service, endpoint, Uniform Resource Identifier (URI), Uniform Resource Locator (URL), back-end, and/or processing system may be used interchangeably in the descriptions herein. The server functionality typically represents data processing/reporting that are not closely tied to the location of sensor apparatuses **310**, **312**, **314**, etc. For example, the server may be located essentially anywhere so long as it has network access to communicate with sensor apparatuses **310**, **312**, **314**, etc.

Server **340** may, for example, be a fleet management centralized monitoring station. In this case, server **340** may receive information from sensor apparatuses associated with various trailers or cargo containers, providing information such as the location of such cargo containers, the temperature within such cargo containers, system information such as tire pressure or vibration sensor readings, any unusual events including sudden decelerations, temperature warnings when the temperature is either too high or too low, cargo load levels within the trailer, among other data. The server **340** may compile such information and store it for future reference. It may further alert an operator. For example, pool management surpluses or deficits may be alerted to an operator.

In other cases, server **340** may compile information regarding estimated arrival times or departure times at a shipping yard. This information may include delivery schedules for the trailer. The estimated arrival times may be dynamically updated based on traffic conditions for the route to the yard.

Other examples of functionality for server **340** are possible.

In the embodiment of **Figure 3**, servers **340** and **342** may further have access to third-party information or information from other servers within the network. For example, a data services provider **350** may provide information to server **340**. Similarly, a data repository or database **360** may also provide information to server **340**.

For example, data services provider **350** may be a subscription-based service used by server **340** to obtain current road and weather conditions. In other cases, data services provider **350** may be a computing system operated by a border agency to provide data on general border conditions or on specific border crossings for vehicles in a fleet. In other cases, the data services provider **350** may be associated with a customer of the transportation company and provide order scheduling and delivery requirements. Other functionality for data services provider **350** would be apparent to those skilled in the art.

Data repository or database **360** may for example provide information such as image data associated with a particular location, aerial maps, low latency access point names, virtual SIM information, or other such information.

The types of information provided by data service provider **350** or the data repository or database **360** are not limited to the above examples and the information provided could be any data useful to server **340**.

In some embodiments, information from data service provider **350** or the data repository from database **360** can be provided to one or more of sensor apparatuses **310**, **312**, or **314** for processing at those sensor apparatuses.

Utilizing the system and devices from **Figures 2** and **3** above, methods and systems for pool management of current and future assets, and for taking remedial actions, are provided.

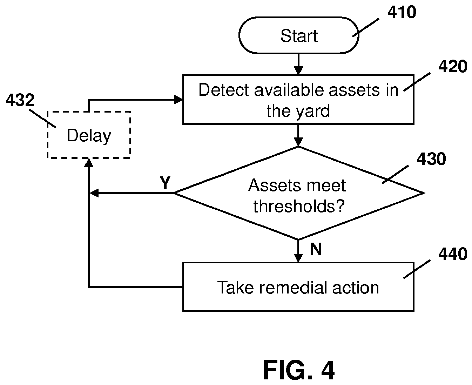

In particular, reference is now made to **Figure 4**, which shows a process for establishing currently available assets and possibly taking remedial action if the currently available assets fall below a threshold or are above a second threshold. The process of **Figure 4** starts at block **410** and proceeds to block **420** in which a current number of available assets in a shipping yard is detected.

The current number of available assets in a shipping yard could be detected in a variety of ways. As used herein, an asset may be any item which may be in the shipping yard, and includes various types of containers, railcars, vehicles such as trucks, and/or a combination of the above, among other options.

In one embodiment, a geofence may exist around the yard, and each vehicle or trailer may be equipped with the sensor apparatus as described above with regard to **Figure 2**. The sensor apparatus may provide the positioning of the trailer or vehicle. In this regard, if the position is reported to be within the geofence then a tally may be made of all trailers or vehicles within the geofence to provide an indication of how many vehicles are currently within the yard. A report may similarly be generated on a vehicle exiting the geofence, allowing in the tally of assets within the shipping yard to be updated accordingly.

In other embodiments, the current number of assets in a yard may be detected in other ways. For example, a yard such as that described in **Figure 1** above may have a fixed number of entry or exit points **160**. The entry or exit points may further include sensors to tally vehicles entering or leaving the yard. For example, such sensors may be cameras which may then be connected to a computer having image recognition software to detect when a vehicle leaves or enters the yard. Such image recognition may also detect the asset type, such as a flatbed trailer or refrigerator truck, for example.

In other cases, weight sensors, magnetic sensors, lasers, or other mechanisms for counting vehicles entering or exiting a yard may be utilized at the entrance and egress points of the yard to keep a tally of the number of assets within the yard. In this case, manual or automatic detection of the type of asset may be used.

In still further embodiments, the number of vehicles in a yard may be compiled by a sensor apparatus on a second vehicle. For example, the sensor apparatus on the second vehicle may include a camera which, when viewing the yard, may allow for a tally of the vehicles within the yard. In particular, the tally may be done by compiling image data at a server or other computing device from one or more vehicles with image capture devices. The second vehicle may be a shunt vehicle or other vehicle within the yard. In some cases, the second vehicle may be another trailer or vehicle that is moving to a parking spot which may provide data back to a server. In still further cases, the second vehicle may be a plurality of vehicles that include the sensor apparatus and the tally may be a composite of data provided by the plurality of the vehicles.

In still further embodiments, a fixed camera may be positioned, for example, on a pole or a crane, which may have a view of the yard or part of the yard and allow for image processing to determine the current number and type of assets in the yard or that part of the yard.

In still further embodiments, the number of assets in the shipping yard may be found by getting the GPS locations of all assets located within the geofence of the yard.

In still further embodiments, a yard tally may be entered by workers within the yard into a computing system. Thus a manual count by people is possible, with the data being entered into a computer system.

Other options for assessing the current number of assets currently within the yard are also possible.

Further, in order for an asset to be available, besides being present in the yard, it may need to be empty. In this regard, an asset may be determined to be empty through various mechanisms. In a first mechanism, a sensor apparatus such as that described above with regard to **Figure 2** may be used to determine whether the asset is empty. For example, the sensor apparatus may include a cargo detection system such as a laser and detector, a time of flight sensor, a camera and light, among other options. Such cargo detection system may be utilized to determine whether the asset is empty.

In other cases, if the asset is an open platform such as a flatbed trailer, image detection apparatuses when the vehicles in the yard, such as through a fixed camera on a pole or on moving cameras on other trailers or yard vehicles may be used to determine whether the open platform is loaded or not.

In further systems, a scale or weight system at the ingress point for the yard may determine if an empty trailer is being brought into the yard. For example, the weight of the trailer may indicate that it is empty.

In still further embodiments, once a trailer has been unloaded, information about the unloaded state of the trailer may be propagated to a computing device and utilized for a pool management asset system.

In still further embodiments, a yard tally may be entered by workers within the yard into a computing system indicating assets which are empty. Thus a manual count by people is possible, with the data being entered into a computer system.

In still further embodiments, an asset may not be available if it is scheduled to be utilized for another delivery. In this case, a delivery system may be cross-referenced with that the pool asset management system to ensure that pool assets are not allocated twice.

For example, when inputting a delivery, a customer of the transportation service may specify the type of asset that is required for such delivery. In other cases, default asset types might be provided it to a customer, and in this case, a customer may need to change such default asset type if a different type of asset is needed.

In some cases, the customer of the transportation company may set a delivery time and/or location. In this case, the need for the asset can be time limited to allow the asset to be freed for future uses after the delivery is completed.

By specifying the asset type needed for a delivery, a pool asset management system can determine whether such class or type of asset is available within the yard or geofence.

From block **420** the process proceeds to block **430** and a check is made to determine whether available assets meet defined thresholds. For example, a shipping company may wish to have at least one or two of each type of asset available at any time. In this case, a pool asset management system may, from the data available from block **420**, determine that the number of assets currently within the yard or geofence do not meet such thresholds. In other cases, an excess of available assets in a shipping yard may trigger the redistribution of the assets to other locations.

If the number of assets does not meet the defined thresholds, the process proceeds from block **430** to block **440** in which remedial action may be taken. In particular, the remedial action may be any action that is done to remedy the deficiency or surplus of assets in the yard or a geofence. For example, in one embodiment, the remedial action may simply be to provide an alert to an operator of the asset management system. The alert, for example, may be provided on a dashboard on an operator's screen indicating yard asset availability. For example, in one case, a deficiency may be highlighted or emphasized in a different color such as red or provided with other mechanisms to alert an operator, including flashing, audio alerts, among other options.

In other cases, the remedial action at block **440** may be to obtain assets from nearby locations. For example, the transportation company may have nearby geofences which may have a surplus of assets. In this case, the pool asset management system may request, either automatically or with operator input, that an asset be relocated to the yard or geofence with the deficiency. For example, the system may send an automatic request to an autonomous vehicle to relocate the asset. In other cases, the system may automatically send an SMS message, email, provide an autonomous phone call, or use another notification mechanism to alert an operator associated with the asset to relocate the asset. In other cases the pool asset management system may provide contact details for a driver associated with the asset to an operator of the pool asset management system, and indicate that such driver needs to be contacted to relocate the asset. Other options for asset relocation are possible.

The search for nearby assets may include distance thresholds in some cases.

In the case of a surplus of assets, the remedial action could be redistribution to other nearby yards or geofences.

In other embodiments, if assets are not available from nearby locations, or if the cost to relocate the asset is a greater than a threshold, in some cases, assets may be leased from leasing partners. This may be done automatically through an asset management system if the asset management system includes leasing options. In other cases, the leasing may be done by prompting an operator to perform such lease. Further, if a surplus of assets are found, in some cases the remedial action could be to reduce the leasing costs to leasing partners to avoid having the asset sit idly.

Other options for remedial actions to remedy a deficiency or surplus of an assets within a yard or geofence would be known to those in the art having her to the above disclosure.

From block **430**, if the assets meet the defined threshold, or from block **440**, the process may proceed back to block **420** in which the available assets in the yard continue to be detected.

In some cases, a delay as shown at block **432** may be provided so that the process does not take up too many resources at the server or computing device. For example, the process may be run every five minutes. However, other values for the delay are possible.

Further, rather than or in addition to a delay, in some embodiments the process may wait for a change in status to trigger it to run again. For example, an entry/exit event, when an approaching asset is a predetermined time/distance away, or a loading or unloading event, among other options, may trigger the process to be run again.

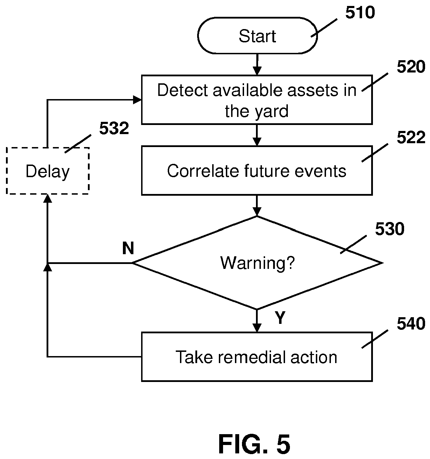

In some embodiments, future events such as scheduled deliveries may be taken into account with regard to asset pool management. Reference is now made to **Figure 5**.

The process of **Figure 5** starts at block **510** and proceeds to block **520** in which a current number of available assets in a shipping yard is detected.

As with block **420** of **Figure 4**, the current number of available assets in a shipping yard could be detected in a variety of ways. Options include a geofence around the yard, where each vehicle or trailer is equipped with a sensor apparatus such as that described above with regard to **Figure 2**. The sensor apparatus may provide the positioning of the trailer or vehicle.

In other embodiments, the current number of assets in a yard may be detected in other ways. For example, a yard such as that described in **Figure 1** above may have a fixed number of entry or exit points **160**. The entry or exit points may further include sensors to tally vehicles entering or leaving the yard.

In other cases, weight sensors, cameras, magnetic sensors, lasers, or other mechanisms for counting vehicles entering or exiting a yard may be utilized at the entrance and egress points of the yard to keep a tally of the number of assets within the yard. In this case, manual or automatic detection of the type of asset may be used.

In still further embodiments, the number of vehicles in a yard may be compiled by a sensor apparatus on a second vehicle. The second vehicle may be a shunt vehicle or other vehicle within the yard. In some cases, the second vehicle may be another trailer or vehicle that is moving to a parking spot which may provide data back to a server. In still further cases, the second vehicle may be a plurality of vehicles that include the sensor apparatus and the tally may be a composite of data provided by the plurality of the vehicles.

In still further embodiments, a fixed camera may be positioned, for example, on a pole or a crane, which may have a view of the yard or part of the yard and allow for image processing to determine the current number and type of assets in the yard or that part of the yard.

In still further embodiments, the number of assets in the shipping yard may be found by getting the GPS locations of all assets located within the geofence of the yard.

In still further embodiments, a yard tally may be entered by workers within the yard into a computing system. Thus a manual count by people is possible, with the data being entered into a computer system.

Other options for assessing the current number of assets currently within the yard are also possible.

Further, in order for an asset to be available, besides being present in the yard, it may need to be empty. In this regard, an asset may be determined to be empty through various mechanisms. As described above with regards to the embodiment of **Figure 4**, in a first mechanism, a sensor apparatus such as that described above with regard to **Figure 2** may be used to determine whether the asset is empty. For example, the sensor apparatus may include a cargo detection system such as a laser and detector, a time of flight sensor, a camera and light, among other options. Such cargo detection system may be utilized to determine whether the asset is empty.

In other cases, if the asset is an open platform such as a flatbed trailer, image detection apparatuses when the vehicles in the yard, such as through a fixed camera on a pole or on moving cameras on other trailers or yard vehicles may be used to determine whether the open platform is loaded or not.

In further systems, a scale or weight system at the ingress point for the yard may determine if an empty trailer is being brought into the yard. For example, the weight of the trailer may indicate that it is empty. In some cases, the type of trailer can also be used in the determination of whether the trailer is empty. For example, the empty weight of each type of trailer could be known and compared with scale readings at ingress or egress points.

The type of trailer may be determined by one or more sensors including, cameras, RFIDs, communication from the trailer on other communications technologies, among other options, and the weight of an empty trailer of that type may be determined by access to a look-up table.

In still further embodiments, once a trailer has been unloaded, information about the unloaded state of the trailer may be propagated to a computing device and utilized for a pool management asset system.

In still further embodiments, a yard tally may be entered by workers within the yard into a computing system indicating assets which are empty. Thus a manual count by people is possible, with the data being entered into a computer system.

In still further embodiments, an asset may not be available if it is scheduled to be utilized for another delivery. In this case, a delivery system may be cross-referenced with that the pool asset management system to ensure that pool assets are not allocated twice.

Again, when inputting a delivery, a customer of the transportation service may specify the type of asset that is required for such delivery. In other cases, default asset types might be provided it to a customer, and in this case, a customer may need to change such default asset type if a different type of asset is needed.

By specifying the asset type needed for a delivery, a pool asset management system can determine whether such class or type of asset exists within the yard or geofence.

From block **520**, the process then proceeds to block **522** in which future events may be correlated against the available assets found at block **420**. In particular, from shipment information, a transportation management system may know when assets are scheduled to enter or leave a yard. Such information may be utilized to project future availability of assets in the yard.

For example, if assets are allocated to future deliveries, then when a new delivery is scheduled those same assets cannot be allocated to such new delivery unless the assets will be free by the time the delivery is scheduled.

In other cases, scheduled deliveries into the yard or geofence may leave a trailer or other asset free for future deliveries. In this case, the timing of the arrival of the asset at the yard, along with an unloading time, may be considered by the asset management system.

The future information may, in some cases, include a buffer time around the scheduled arrival. In this way, assets that arrive late can be still be included in the tally of available assets based on the buffer.

Further, the future information may be correlated to sensor data on a vehicle or trailer. For example, an asset that is scheduled to arrive in two hours but is showing from its GPS positioning and that it is at least three hours away from the yard could allow for the calculation of available assets be adjusted accordingly. Similarly, when an asset clears a border crossing more quickly than scheduled, this may bring forward the arrival time of the asset at the yard and allow the yard to adjust available assets accordingly.

Based on the values assessed at blocks **520** and **522**, a future projection for available assets may be made. Thresholds may be created to allow for warnings to be provided to operators if the available assets at a yard or geofence fall below a threshold value or raise above a different threshold value. For example, a first warning may be provided to an operator if the number of available assets falls below a first threshold. A second warning may in some cases be provided, perhaps raising the warning level if insufficient assets are available for future deliveries. A third warning could be issued if the number of unused assets exceeds a set threshold. However, such thresholds are merely provided for illustration and the specific number of warning thresholds and the threshold level for each warning could be customized based on the needs of the transportation management system.

Therefore, from block **522** the process proceeds to block **530** and checks whether or not a warning situation exists. In this case, the warning situation may exist if asset availability falls below or above a certain threshold within a foreseeable time.

If no warning situation exists, the process may proceed from block **530** back to block **520** to again determine asset availability. In some cases, a delay as shown at block **532** may be provided so that the process does not take up too many resources at the server or computing device. For example, the process may be run every five minutes. However, other values for the delay are possible.

Further, rather than or in addition to a delay, in some embodiments the process may wait for a change in status to trigger it to run again. For example, an entry/exit event, when an approaching asset is a predetermined time/distance away, or a loading or unloading event, a new delivery scheduling event being input, among other options, may trigger the process to be run again.

If a warning situation is found at block **530** then the process proceeds to block **540** in which remedial action may be performed. Such remedial action may include an alert that may be provided it to an operator. For example, the alert may be a warning message on a screen, a flashing light on a control panel, among other options. In other cases, the alert may be sent to the operator using Short Message Service (SMS) messages, email, a phone call, among other options.

In other cases, the remedial action may be the moving of assets to or from the yard to overcome the deficiency or surplus in assets within the yard. For example, a flatbed trailer in a nearby yard may be moved to the present yard or geofence based on the determination at block **530**. The moving of the asset may be done automatically, with or without operator intervention. For example, in situations where the fleet includes autonomous vehicles, these vehicles may be directed to change position to the present yard or geofence. In cases where operators are involved in the moving of assets, the operators may be signaled through various mechanisms, including emails, phone calls, text messages, among other options. The signaling may be done automatically by the computing device or with operator intervention.

From block **540** the process proceeds back to block **520** to continue to monitor available assets. The delay at block **532** may optionally be part of the process, or a trigger could be used, as described above.

While the embodiments of **Figures 4** and **5** provide various functionality for a server, other functionally for the server would be apparent to those skilled in the art having regard to the present disclosure.

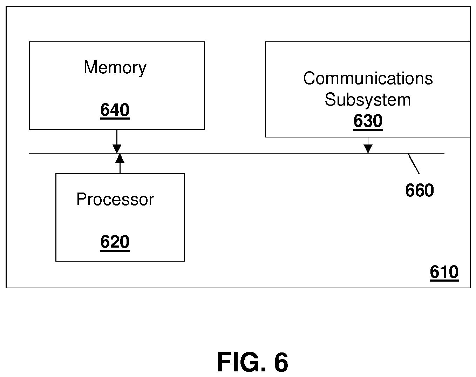

A server such as servers **340**, **342** or **350** may be any network node. For example, one simplified server that may perform the embodiments described above is provided with regards to **Figure 6**.

In **Figure 6**, server **610** includes a processor **620** and a communications subsystem **630**, where the processor **620** and communications subsystem **630** cooperate to perform the methods of the embodiments described herein.

The processor **620** is configured to execute programmable logic, which may be stored, along with data, on the server **610**, and is shown in the example of **Figure 6** as memory **640**. The memory **640** can be any tangible, non-transitory computer readable storage medium, such as optical (e.g., CD, DVD, etc.), magnetic (e.g., tape), flash drive, hard drive, or other memory known in the art. In one embodiment, processor **620** may also be implemented entirely in hardware and not require any stored program to execute logic functions.

Alternatively, or in addition to the memory **640**, the server **610** may access data or programmable logic from an external storage medium, for example through the communications subsystem **630**.

The communications subsystem **630** allows the server **610** to communicate with other devices or network elements.

Communications between the various elements of the server **610** may be through an internal bus **660** in one embodiment. However, other forms of communication are possible.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

While the above examples have been described in relation to pool management of transportation assets, the invention may be applicable in other forms of pool management where assets are shared and moved between various locations. For example, medical assets, education assets, marketing assets, among other asset types, or any form of transportation assets, could use the systems and methods described herein.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be employed. Moreover, the separation of various system components in the implementation descried above should not be understood as requiring such separation in all implementations, and it should be understood that the described program components and systems can generally be integrated together in a signal software product or packaged into multiple software products. In some cases, functions may be performed entirely in hardware and such a solution may be the functional equivalent of a software solution

Also, techniques, systems, subsystems, and methods described and illustrated in the various implementations as discrete or separate may be combined or integrated with other systems, modules, techniques, or methods. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made.

While the above detailed description has shown, described, and pointed out the fundamental novel features of the disclosure as applied to various implementations, it will be understood that various omissions, substitutions, and changes in the form and details of the system illustrated may be made by those skilled in the art. In addition, the order of method steps is not implied by the order they appear in the claims.

When messages are sent to/from an electronic device, such operations may not be immediate or from the server directly. They may be synchronously or asynchronously delivered, from a server or other computing system infrastructure supporting the devices/methods/systems described herein. The foregoing steps may include, in whole or in part, synchronous/asynchronous communications to/from the device/infrastructure. Moreover, communication from the electronic device may be to one or more endpoints on a network. These endpoints may be serviced by a server, a distributed computing system, a stream processor, etc. Content Delivery Networks (CDNs) may also provide may provide communication to an electronic device. For example, rather than a typical server response, the server may also provision or indicate a data for content delivery network (CDN) to await download by the electronic device at a later time, such as a subsequent activity of electronic device. Thus, data may be sent directly from the server, or other infrastructure, such as a distributed infrastructure, or a CDN, as part of or separate from the system.

Typically, storage mediums can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

In particular, the present disclosure may include the embodiments of the following clauses:
AA. A method at a computing device for pool management, the method comprising: determining a number and type of available assets in a defined area; finding that the number of available assets in at least one type of assets falls outside a defined range; and performing a remedial action based on the finding.
BB. The method of clause AA, wherein the determining is based on at least one report from an asset.
CC. The method of clause BB, wherein the report provides a location and loading status for the asset.
DD. The method of any one of clauses AA to CC, wherein the report is based on sensor data from the defined area.
EE. The method of clause DD, wherein the sensor data includes camera data from the defined area.
FF. The method of any one of clauses AA to EE, wherein the defined area is a geofence or shipping yard.
GG. The method of any one of clauses AA to FF, wherein the determining is for a current or future time period.
HH. The method of clause GG, wherein the computing device is further configured to receive, prior to the determining, scheduling data for one or more assets associated with the defined area.
II. The method of any one of clauses AA to HH, wherein the remedial action includes providing an alert from the computing device.
JJ. The method of any one of clauses AA to II, wherein the remedial action includes relocating at least one asset.
KK. A computing device configured for pool management, the computing device comprising: a processor; and a communications subsystem, wherein the computing device is configured to: determine a number and type of available assets in a defined area; find that the number of available assets in at least one type of assets falls outside a defined range; and perform a remedial action based on the finding.
LL. The computing device of clause KK, wherein the computing device is configured to determine based on at least one report from an asset.
MM. The computing device of clause LL, wherein the report provides a location and loading status for the asset.
NN. The computing device of any one of clauses KK to MM, wherein the report is based on sensor data from the defined area.
OO. The computing device of clause NN, wherein the sensor data includes camera data from the defined area.
PP. The computing device of any one of clauses KK to OO, wherein the defined area is a geofence or shipping yard.
QQ. The computing device of any one of clauses KK to PP, wherein the computing device is configured to determine for a current or future time period.
RR. The computing device of clause QQ, wherein the computing device is further configured to receive, prior to the determining, scheduling data for one or more assets associated with the defined area.
SS. The computing device of any one of clauses KK to RR, wherein the remedial action includes providing an alert from the computing device.
TT. The computing device of any one of clauses KK to SS, wherein the remedial action includes relocating at least one asset.

## Claims

1. A method at a computing device for pool management, the method comprising:
determining a number and type of available assets in a defined area;
finding that the number of available assets in at least one type of assets falls outside a defined range; and
performing a remedial action based on the finding.

2. The method of claim 1, wherein the determining is based on at least one report from an asset.

3. The method of claim 2, wherein the report provides a location and loading status for the asset.

4. The method of any previous claim, wherein the report is based on sensor data from the defined area.

5. The method of claim 4, wherein the sensor data includes camera data from the defined area.

6. The method of any previous claim, wherein the defined area is a geofence or shipping yard.

7. The method of any previous claim, wherein the determining is for a current or future time period.

8. The method of claim 7, wherein the computing device is further configured to receive, prior to the determining, scheduling data for one or more assets associated with the defined area.

9. The method of any previous claim, wherein the remedial action includes providing an alert from the computing device.

10. The method of any previous claim, wherein the remedial action includes relocating at least one asset.

11. A computing device configured for pool management, the computing device comprising:
a processor; and
a communications subsystem,
wherein the computing device is configured to perform the method of any of claims 1 to 10.

12. A computer readable medium for storing instruction code which, when executed by a processor on a computing device configured for pool management, cause the computing device to perform the method of any of claims 1 to 10.
